# EUROPÄISCHE PATENTSCHRIFT

(11) **EP 1 538 811 B1**
(45) Veröffentlichungstag und Bekanntmachung des Hinweises auf die Patenterteilung: **04.10.2006**
(21) Anmeldenummer: 03027989.7
(22) Anmeldetag: 05.12.2003
(51) Int. Cl.: H04L 29/08

(54) **Verfahren zum Evaluieren eines Anzeigedatensatzes auf einem Rechner**
Method for evaluating displayed data on a computer
Procédé pour évaluer des données affichées sur un ordinateur

(30) Priorität: 01.12.2003 EP 03027575
(43) Veröffentlichungstag der Anmeldung: 08.06.2005
(73) Patentinhaber: Laukamm, Thomas, Dr., 42579 Heiligenhaus (DE); Laukamm, Lars, 42579 Heiligenhaus (DE)
(72) Erfinder: Laukamm, Thomas, Dr., 42579 Heiligenhaus (DE); Laukamm, Lars, 42579 Heiligenhaus (DE)
(74) Vertreter: Gesthuysen, von Rohr & Eggert

(56) Entgegenhaltungen:
- FR-A- 2 804 807
- US-A- 5 950 172
- US-A1- 2002 099 591
- US-A1- 2002 147 776

## Beschreibung

Die Erfindung betrifft ein Datenübertragungsverfahren, zur Übertragung von Datensätzen zwischen wenigstens einem Server und einem Client, wobei ein Anzeigedatensatz vorgesehen ist, der auf dem Server gehalten wird und für den Client über eine zumindest temporär zu dem Server aufgebaute Verbindung zugänglich ist, der Anzeigedatensatz von dem Server über die zumindest temporär aufgebaute Verbindung automatisch abgerufen, auf den Client übertragen und von dem Client angezeigt wird.

Vorliegend ist mit dem Begriff "Server" jede Einrichtung gemeint, die in der Lage ist, eine Mehrzahl von Datensätzen zu halten und anderen Einrichtungen, nämlich den "Clients", zur Verfügung zu stellen. Dabei ist die Datenübertragung zwischen dem Server und den Clients nicht auf eine unidirektionale Datenübertragung von dem Server zu den Clients beschränkt, sondern kann auch bidirektional sein, so daß auch Daten von den Clients zu dem Server übertragen werden, was nicht zuletzt schon zur Steuerung erforderlich sein kann.

Solche Server und Clients können z. B. Internet-Server und an das Internet angeschlossene Computer, wie PCs (Personal Computer) oder auch PDAs (Personal Digital Assistants) sowie Mobiltelefone mit Internet-Schnittstelle sein. Das vorliegend beschriebene Datenübertragungsverfahren ist jedoch nicht auf den Bereich von Servern und Clients im Internet beschränkt. Vielmehr betrifft das vorliegend beschriebene Datenübertragungsverfahren alle Bereiche, in denen Server vorgesehen sein können, die eine Mehrzahl von Datensätzen halten, um diese Clients über ein grundsätzlich beliebig geartetes Netzwerk zur Verfügung stellen zu können. Als weitere Beispiele seien die Rundfunkübertragung (Radio und Fernsehen) sowie die Übertragung in Mobilfunknetzen und die Übertragung in LANs (Local Area Networks), gegebenenfalls als Intranet ausgestaltet, genannt.

Lediglich zum einfacheren Verständnis und zur beispielhaften Konkretisierung wird im folgenden häufig auf solche Server und Clients Bezug genommen, die Bestandteil des Internet sind bzw. über das Internet miteinander verbunden sind. Bei im Internet vorgesehenen Servern, die die von ihnen gehaltenen Datensätze grundsätzlich jedem Client mit Internet-Schnittstelle zur Verfügung stellen können, erfolgt die Datenübertragung auf der Grundlage internationaler Standards, wie dem TCP/IP-Protokoll (Transmission Control Protocol/Internet Protocol). Die auf dem Server gehaltenen Datensätze entsprechend einem bestimmten Code und sind beispielsweise HTML-Dateien (Hypertext Markup Language). Bei der Übertragung eines HTML-Datensatzes von einem Server zu einem Client erfolgt auf dem Client eine Interpretation der HTML-Befehle, so daß es zu einer entsprechenden Anzeige typischerweise auf einem Monitor des Clients kommt. Darüber hinaus sind verschiedene Script-Sprachen bekannt, mit denen sich eine, gegebenenfalls animierte, Anzeige auf dem Client erzielen läßt.

Zur Anzeige von auf einem Internet-Server gehaltenen Datensätzen ist ein geeignetes Anzeigeprogramm, ein sogenannter Browser erforderlich. Dieser Browser ist in der Lage, die von dem Server zu dem Client übertragenen Datensätze zu interpretieren und in eine entsprechende Anzeige umzusetzen. Darüber hinaus erlaubt der Browser auch die Übertragung von Daten vom Client zu einem Server. Dies ist einerseits zur Navigation im Internet erforderlich, also nicht zuletzt um überhaupt auf bestimmte Datensätze eines Servers zugreifen zu können, andererseits können auf diese Weise an den Server z. B. solche Daten übertragen werden, die für eine Kaufabwicklung über das Internet erforderlich sind. Besucht der Nutzer eines Clients mit seinem Client z. B. einen auf einem Internet-Server betriebenen Online-Shop, so ist es schließlich nicht nur erforderlich, die entsprechenden Angebotsseiten vom Server übertragen und angezeigt zu bekommen, sondern auch, Informationen bezüglich gewünschter Produkte und weitere Informationen, wie Adreß- und Versandinformationen sowie Zahlungsinformationen, vom Client an den Server zu übertragen.

Bei aus dem Stand der Technik bekannten Intemet-Browsem kann eine solche Datenübertragung von einem Client an einen Server einerseits über die aufgerufene Internet-Seite erfolgen. Dies ist z. B. bei der Eingabe von Adreßdaten der Fall, um den Versand einer Bestellung an diese Adresse zu erwirken. Darüber hinaus erlauben herkömmliche Intemet-Browser die Eingabe von Intemetadressen, entweder als IP-Nummer oder über den zugehörigen Domain-Namen, in einem Fenster des Intemet-Browsers, um die entsprechende, von dem Nutzer gewünschte Seite zu öffnen. Wesentlich bei den bisherigen Internet-Browsern ist, daß nur eine solche Art der Dateneingabe und Datenübertragung an einen Server möglich ist, die von der jeweils aufgerufenen Internet-Seite angeboten und zugelassen wird. Das heißt, daß der Nutzer gegebenenfalls keine Möglichkeit hat, bestimmte von ihm oder einem Dritten gewünschte Daten zu übertragen, wenn eine solche Internet-Seite aufgerufen ist, zu deren Quell-Code er keinen Zugang hat, die er also nicht entsprechend seinen Wünschen für mögliche Datenübertragungen an einen Server verändern kann.

Das in der Patentschrift US 2002/0147776 beschriebene Verfahren verfügt beispielsweise über genannte Schwächen; in einem Client Server-System kann der Benutzer des Clients nur dann Daten eingeben und übertragen, nach dem er die Internet-Seite in ihrer Gesamtheit geladen hat.

Ausgehend davon ist es die Aufgabe der Erfindung, ein solches Datenübertragungsverfahren anzugeben, mit dem bei der Anzeige eines auf einem Server gehaltenen Datensatzes auf einem Client eine von dem angezeigten Datensatz unabhängige Datenübertragung erfolgen kann.

Ausgehend von dem eingangs beschriebenen Datenübertragungsverfahren ist die zuvor hergeleitete und aufgezeigte Aufgabe dadurch gelöst, daß zumindest teilweise zeitlich überlappend mit der von dem Client erfolgenden Anzeige des Anzeigedatensatzes auf der Grundlage eines von dem Anzeigedatensatz verschiedenen Fragedatensatzes von dem Client an den Nutzer des Clients automatisch eine Eingabeaufforderung zur Eingabe von Antwortdaten ergeht.

Erfindungswesentlich ist also, daß an den Nutzer des Clients über den Client automatisch eine solche Eingabeaufforderung ergeht, die auf einem Fragedatensatz basiert, der von dem Anzeigedatensatz verschieden ist. Unabhängig davon, ob der Anzeigedatensatz überhaupt eine Eingabe und Übertragung von Daten an einen Server zuläßt, kann also mit Hilfe des Fragedatensatzes genau bestimmt werden, was für Antwortdaten im Client eingegeben werden können.

Übertragen auf einen Intemet-Browser bedeutet dies, daß die erfindungsgemäß auf dem Fragedatensatz basierende Eingabeaufforderung nicht im eigentlichen Browser-Fenster erfolgt, in dem die aufgerufene Internet-Seite angezeigt wird, sondern in einem anderen Fenster, dessen Form und Inhalt von dem Fragedatensatz bestimmt wird. Aufgrund der Tatsache, daß das auf dem Fragedatensatz basierende Fenster mit der Eingabeaufforderung und das eigentliche Browser-Fenster zumindest zeitlich überlappend angezeigt werden, ist es z. B. möglich, Antworten zu solchen Fragen zu erhalten, die sich auf die gerade angezeigte Internet-Seite beziehen. Konkret heißt dies, daß mit dem erfindungsgemäßen Datenübertragungsverfahren beliebige Internet-Seiten Dritter angezeigt werden können, deren Inhalt nicht beeinflußt und verändert werden kann, und trotzdem zu diesen Internet-Seiten Dritter Informationen eingegeben werden können.

Gemäß einer bevorzugten Weiterbildung der Erfindung ist vorgesehen, daß die auf die Eingabeaufforderung hin von dem Nutzer eingegebenen Antwortdaten automatisch an einen Feedback-Server übertragen werden. Dabei ist der Feedback-Server unabhängig von dem Anzeigedatensatz bestimmbar.

Im Bild eines Internet-Browsers können also der Server, auf dem sich die anzuzeigende Internet-Seite befindet, und der Feedback-Server, auf den die Übertragung der Antwortdaten erfolgt, voneinander verschieden sein. Als ein Beispiel für ein solches Verfahren sei hier vorerst nur eine Marktforschungsstudie genannt, bei der auf diese Weise Informationen bezüglich der Beurteilung einer Internet-Seite an den Feedback-Server eines Marktforschungsinstituts übertragen werden können.

Wie zuvor schon ausgeführt, liegt ein maßgeblicher Aspekt der Erfindung darin, daß die von dem Client erfolgende Anzeige des Anzeigedatensatzes und die Eingabeaufforderung zur Eingabe von Antwortdaten zeitlich wenigstens um ein gewisses Maß überlappen. Gemäß einer bevorzugten Weiterbildung der Erfindung ist jedoch vorgesehen, daß die von dem Client erfolgende Anzeige des Anzeigedatensatzes und die auf der Grundlage des Fragedatensatzes erfolgende Eingabeaufforderung von dem Client an den Nutzer des Clients zur Eingabe von Antwortdaten synchron erfolgen.

Wieder übertragen auf einen Intemet-Browser würde das bedeuten, daß zur Anzeige einer beliebigen Internet-Seite im eigentlichen Browser-Fenster in einem zusätzlichen Fenster, z. B. unter dem eigentlichen Browser-Fenster, zeitlich gleichzeitig eine Eingabeaufforderung erfolgt. Nach der Eingabe von Antwortdaten kann dann automatisch eine neue Internet-Seite im eigentlichen Browser-Fenster aufgerufen werden, wozu, basierend auf dem gleichen oder einem neuen Fragedatensatz wiederum automatisch eine Eingabeaufforderung zur Eingabe von Antwortdaten in einem separaten Fenster ergeht.

Erfindungswesentlich ist außerdem, daß der Fragedatensatz von dem Anzeigedatensatz verschieden ist. Insbesondere ist dabei vorgesehen, daß der Fragedatensatz für den Betreiber des erfindungsgemäßen Datenübertragungsverfahrens zugänglich ist, so daß der Betreiber des erfindungsgemäßen Datenübertragungsverfahren den Fragedatensatz entsprechend der gewünschten Eingabeaufforderung einrichten und verändern kann. Dazu kann der Fragedatensatz gemäß einer bevorzugten Weiterbildung der Erfindung auf dem Client gehalten werden. Gemäß einer anderen bevorzugten Weiterbildung der Erfindung ist es jedoch auch möglich, den Fragedatensatz online, nämlich zu Beginn oder während des Datenübertragungsverfahrens, über eine zumindest temporär aufgebaute Verbindung von einem Fragedaten-Server auf den Client zu übertragen.

Um im Bild des Intemet-Browsers zu bleiben, kann also ein erfindungsgemäß modifizierter Internet-Browser, nämlich ein Intemet-Browser mit Rückkanal, vorgesehen sein, der z. B. auf einem PC läuft. Der Fragedatensatz selbst wird auf einem Fragedaten-Server gehalten, und bei der Aktivierung des entsprechenden Fragedatensatzes durch den Browser mit Rückkanal wird einerseits automatisch eine mit dem entsprechenden Fragedatensatz verbundene Internet-Seite geöffnet und andererseits automatisch die mit dem Fragedatensatz verbundene Eingabeaufforderung in dem Browser mit Rückkanal angezeigt. Die Rückkanal-Funktion des Browsers liegt dann darin, daß die auf die Eingabeaufforderung eingegebenen Antwortdaten automatisch an einen durch den Fragedatensatz bestimmten Feedback-Server übertragen werden.

Dabei kann gemäß einer bevorzugten Weiterbildung der Erfindung vorgesehen sein, daß als Fragedaten-Server der Feedback-Server verwendet wird. Es sei jedoch darauf hingewiesen, daß grundsätzlich verschiedene und jeweils auch mehrere Fragedaten-Server und Feedback-Server verwendet werden können.

Die eingegebenen Antwortdaten können grundsätzlich auch in anderen Einrichtungen als dem vom Nutzer betriebenen Client eingegeben und von dieser Einrichtung an den Feedback-Server übertragen werden. Gemäß einer bevorzugten Weiterbildung der Erfindung ist jedoch vorgesehen, daß die Eingabe der Antwortdaten über den Client erfolgt und die automatische Übertragung der Antwortdaten an den Feedback-Server ebenfalls über den Client, vorzugsweise nämlich online, erfolgt. Zwar ist eine Online-Übertragung nicht zwingend erforderlich, die eingegebenen Antwortdaten können nämlich grundsätzlich vorerst auf dem Client gespeichert werden. Eine Online-Übertragung an den Feedback-Server ist jedoch insofern vorteilhaft, als daß die Antwortdaten auf diese Weise umgehend für eine Auswertung zur Verfügung stehen.

Gemäß einer bevorzugten Weiterbildung der Erfindung ist ferner vorgesehen, daß für die Anzeige des Anzeigedatensatzes, für die Eingabeaufforderung auf der Grundlage des Fragedatensatzes und für die Eingabe der Antwortdaten eine, vorzugsweise gemeinsame, Anzeigevorrichtung verwendet wird. Bei der Verwendung eines PCs wird die Anzeigevorrichtung typischerweise ein in den PC integrierter oder mit dem PC verbundener Monitor sein. Für die Eingabe der Antwortdaten ist darüber hinaus eine Eingabevorrichtung erforderlich. Dies wird bei der Verwendung eines PCs typischerweise eine Tastatur und/oder ein Zeigegerät, wie eine Maus, sein. Grundsätzlich sind jedoch auch andere Eingabemöglichkeiten, wie Spracheingabe über ein Mikrophon, denkbar.

Weiter oben ist schon angedeutet worden, daß gemäß einer bevorzugten Weiterbildung der Erfindung zeitlich aufeinanderfolgend eine Mehrzahl von Anzeigedatensätzen von dem Server oder von einem oder mehreren anderen Servern auf den Client übertragen und von dem Client angezeigt werden kann, wobei jeweils zumindest teilweise zeitlich überlappend mit der von dem Client erfolgenden Anzeige des jeweiligen Anzeigedatensatzes auf der Grundlage eines von dem Anzeigedatensatz verschiedenen jeweiligen Fragedatensatzes automatisch von dem Client an den Nutzer des Clients eine jeweilige Eingabeaufforderung zur Eingabe von Antwortdaten ergeht, wobei die daraufhin von dem Nutzer eingegebenen jeweiligen Antwortdaten automatisch an den Feedback-Server übertragen werden.

Dabei können die verschiedenen Anzeigedatensätze auf demselben oder auf verschiedenen Servern vorgesehen sein. Sie sind jedenfalls immer von den Fragedatensätzen verschieden. Darüber hinaus sind der Fragedaten-Server und der Feedback-Server, die wie oben ausgeführt, in einem gemeinsamen Server zusammengefaßt sein können, von den Servern verschieden, von denen die Anzeigedatensätze auf den Client übertragen werden.

Schließlich liegt eine bevorzugte Weiterbildung der Erfindung insbesondere darin, daß ein vorbestimmtes Regelwerk vorgesehen ist, in dem der jeweils anzuzeigende Anzeigedatensatz und damit der entsprechende Server, auf dem der Anzeigedatensatz gehalten ist, sowie der zugehörige jeweilige Fragedatensatz für die Eingabeaufforderung festgelegt sind. Ferner kann in dem Regelwerk die Reihenfolge der anzuzeigenden Anzeigendatensätze festgelegt sein.

Ist eine vorbestimmte Reihenfolge der anzuzeigenden Anzeigedatensätze vorgesehen, so werden die entsprechenden Anzeigendatensätze nacheinander angezeigt, wobei jeweils automatisch ein Wechsel zum nächsten Anzeigedatensatz vorgesehen sein kann. In diesem Zusammenhang kann grundsätzlich die Möglichkeit zur Verfügung gestellt werden, zu einem beliebigen der gemäß dem Regelwerk vorgesehenen Anzeigedatensätze zu wechseln. Dies kann insbesondere bedeuten, daß ein Wechsel zu dem vorhergehenden Anzeigedatensatz, einem beliebigen schon angezeigten Anzeigedatensatz oder/und ein Wechsel zu einem beliebigen noch nicht angezeigten Anzeigedatensatz vorgesehen ist. Dabei gilt, daß das Regelwerk entweder auf dem Client gehalten wird oder, vorzugsweise online, zu Beginn oder während des Datenübertragungsverfahrens über eine zumindest temporär aufgebaute Verbindung von dem Fragedaten-Server auf den Client übertragen wird.

Um schließlich auch hier im Bild des Internet-Browsers zu bleiben, könnte also vorgesehen sein, daß von dem schon angesprochenen modifizierten Browser mit Rückkanal das im Internet auf einem Fragedaten-Server gehaltene Regelwerk aktiviert wird und dann nacheinander automatisch jeweils eine Internet-Seite in dem eigentlichen Browser-Fenster und in einem z. B. darunter liegenden Fenster eine entsprechende Eingabeaufforderung angezeigt werden. Auf die Eingabe von Antwortdaten hin oder auf eine separate Bestätigung hin werden die Antwortdaten dann automatisch an den Feedback-Server übertragen oder zumindest vorerst auf dem Client abgespeichert, um dann automatisch zu einer nächsten Internet-Seite mit einer entsprechenden Eingabeaufforderung in einem separaten Fenster zu wechseln. Zur Änderung von schon eingegebenen Antwortdaten kann dabei auch vorgesehen sein, daß zu schon angezeigten Internet-Seiten zurückgesprungen werden kann.

Bezüglich des angesprochenen Browsers mit Rückkanal kann im übrigen vorgesehen sein, daß es sich dabei um ein echtes Client-Programm handelt, also ein Programm, das unter dem Betriebssystem des Clients lauffähig ist und auch auf dem Client selbst ausgeführt wird. Um immer eine aktuelle Version dieses Client-Programms zu verwenden kann dabei gemäß einer bevorzugten Weiterbildung der Erfindung vorgesehen sein, daß bei jedem Start des Client-Programms eine Abfrage auf einem im Internet vorgesehenen vorbestimmten Server erfolgt, ob die vorliegende Version des Client-Programms noch aktuell ist. Sollte die Version veraltet sein, wird ein aktuelles Programm über das Internet auf den Client übertragen und dann erst gestartet.

Die Erfindung ist jedoch nicht darauf beschränkt, daß - im Bilde eines Internet-Browsers - das Datenübertragungsverfahren durch einen Programmablauf auf dem Client gesteuert wird. Vielmehr ist es auch möglich, eine zentral auf einem Server ablaufende Steuerung für das erfindungsgemäße Verfahren vorzusehen und dem Client dazu nur die entsprechenden Anzeigedaten zu übermitteln. Dem Client käme damit lediglich eine Terminal-Funktion zu, was insbesondere auch die Verwendung von geringen Datenübertragungsraten und von technisch unaufwendigen Geräten z. B. mit wenig Speicher und geringer Prozessorleistung, ermöglichen würde. In diesem Fall wäre das Regelwerk auch nicht an den Client, sondern an den Server zu übertragen, auf dem das Verfahren abläuft.

Die Durchführung des erfindungsgemäßen Verfahrens kann unterbrechungsfrei erfolgen. Gemäß einer bevorzugten Weiterbildung der Erfindung kann jedoch die Möglichkeit bereitgestellt werden, das Verfahren mit wenigstens einer Unterbrechung durchzuführen. Dazu ist vorzugsweise insbesondere vorgesehen, daß der Ablauf des Verfahrens automatisch protokolliert wird, so daß der aktuelle Status jederzeit verfügbar ist, und ein unterbrochenes Verfahren jederzeit wieder aufgenommen werden kann. Dabei erfolg die Protokollierung vorzugsweise auf einem von dem Client verschiedenen Server. Auf diese Weise kann ein unterbrochenes Verfahren auf dann wieder an der richtigen Stelle aufgenommen werden, wenn das Verfahren von einem anderen Client aus weitergeführt werden soll, solange von diesem anderen Client aus Zugriff auf den Server besteht, auf dem die Protokollierung erfolgt ist. In diesem Zusammenhang kann es im übrigen auch vorteilhaft sein, die Antwortdaten direkt online an den Feedback-Server zu übertragen und nicht erst auf dem Client zu sammeln.

Schließlich ist gemäß einer bevorzugten Weiterbildung der Erfindung vorgesehen, daß das Verfahren bei seinem Start als ersten Schritt eine automatische Passwort-Abfrage aufweist. Das heißt, daß von dem Client erst dann ein Fragedatensatz angezeigt wird, wenn die Passwort-Abfrage positiv verlaufen ist. Auf diese Weise kann sichergestellt werden, daß das Verfahren nur von vorbestimmten Nutzern verwendbar ist, so daß erfaßte Antwortdaten auch tatsächlich von diesen vorbestimmten und nicht von beliebigen Nutzern stammen.

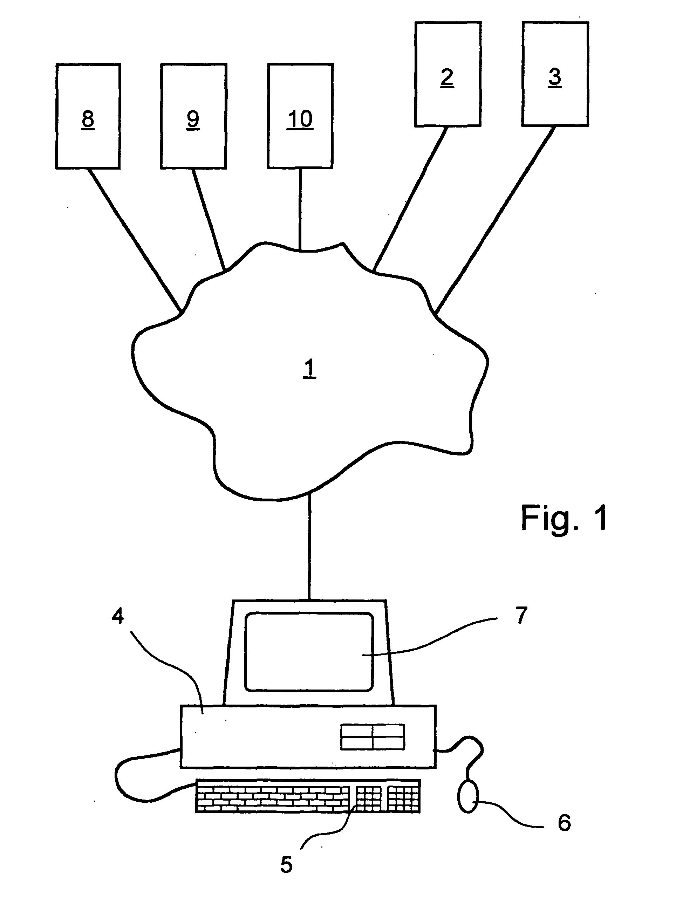

Im einzelnen gibt es nun eine Vielzahl von Möglichkeiten, das erfindungsgemäße Datenübertragungsverfahren auszugestalten und weiterzubilden. Dazu wird auf die dem Patentanspruch 1 nachgeordneten Patentansprüche sowie auf die nachfolgende detaillierte Beschreibung bevorzugter Ausführungsbeispiele der Erfindung unter Bezugnahme auf die Zeichnung verwiesen. In der Zeichnung zeigt
- Fig. 1: schematisch die für ein Datenübertragungsverfahren gemäß einem bevorzugten Ausführungsbeispiel der Erfindung verwendeten, über das Internet miteinander verbundenen Einrichtungen und
- Fig. 2: schematisch den Ablauf des Datenübertragungsverfahrens gemäß einem bevorzugten Ausführungsbeispiel der Erfindung am Beispiel eines Intemet-Browsers.

Im folgenden wird ein Datenübertragungsverfahren gemäß einem bevorzugten Ausführungsbeispiel der Erfmdung erläutert, das im Internet 1 und mit über das Internet 1 miteinander verbundenen Einrichtungen durchführbar ist. Dabei sind ein Fragedaten-Server 2 und ein Feedback-Server 3 vorgesehen, die alle für das Datenübertragungsverfahren gemäß dem vorliegend beschriebenen bevorzugten Ausführungsbeispiel der Erfindung erforderlichen Komponenten bereitstellen. In dem über das Internet 1 für einen grundsätzlich beliebigen Client 4, vorliegend einem PC, zugänglichen Fragedaten-Server 2 wird ein auf dem Client 4 lauffähiges Programm gehalten, über das das Datenübertragungsverfahren abläuft und gesteuert wird. Weiterhin sind in dem Fragedaten-Server 2 eine Mehrzahl von Fragedatensätzen und ein Regelwerk verfügbar, das festlegt, welche Internet-Seiten zusammen mit welchen Fragedatensätzen nacheinander in vorbestimmter Reihenfolge über das auf dem Client 4 lauffähige Programm, einem Browser mit Rückkanal, angezeigt werden. Der als PC ausgebildete Client 4 weist vorliegend als Eingabeeinrichtungen eine Tastatur 5 sowie eine Maus 6 auf, während als Ausgabeeinrichtung ein Monitor 7 vorgesehen ist.

Die Durchführung des Datenübertragungsverfahrens gemäß dem vorliegend beschriebenen bevorzugten Ausführungsbeispiel der Erfindung ist wie folgt: Der Nutzer des Clients 4 initiiert das Datenübertragungsverfahren z. B. dadurch, daß er über einen herkömmlichen Browser eine auf dem Fragedaten-Server 2 gehaltene Internet-Seite öffnet und auf dieser Seite eine mit "Marktforschungsumfrage" gekennzeichnete Schaltfläche betätigt. Daraufhin wird automatisch erkannt, daß ein Datenübertragungsverfahren gestartet werden soll, für das der angesprochene Browser mit Rückkanal verwendet werden muß. Es wird also automatisch geprüft, ob auf dem Client 4 dieser modifizierte Browser mit Rückkanal vorhanden ist. Ist er nicht vorhanden, wird er automatisch vom Fragedaten-Server 2 über das Internet 1 auf den Client 4 geladen. Dazu ist auf dem Fragedaten-Server 2 immer eine aktuelle Version des modifizierten Browsers mit Rückkanal gespeichert. Ist der Browser mit Rückkanal schon im Client 4 vorhanden, so wird automatisch geprüft, ob die Version des vorhandenen Browsers mit Rückkanal der aktuellen, auf dem Fragedaten-Server 2 abgespeicherten Version entspricht, und gegebenenfalls wird die aktuelle Version des Fragedaten-Servers 2 auf den Client 4 über das Internet 1 automatisch übertragen.

Nach Start des Browsers mit Rückkanal wird, bestimmt durch das auf dem Fragedaten-Server 2 gehaltene Regelwerk, einerseits in einem Fenster des Browser mit Rückkanal automatisch eine auf einem mit dem Internet 1 verbundenen Server 8 gehaltene Internet-Seite geöffnet, d. h. es wird ein auf dem ersten Server 8 gehaltener Anzeigedatensatz angezeigt. Andererseits wird gleichzeitig dazu ein auf dem Fragedaten-Server 2 gehaltener Fragedatensatz, verwendet, um gleichzeitig zu der Internet-Seite automatisch eine Eingabeaufforderung anzuzeigen.

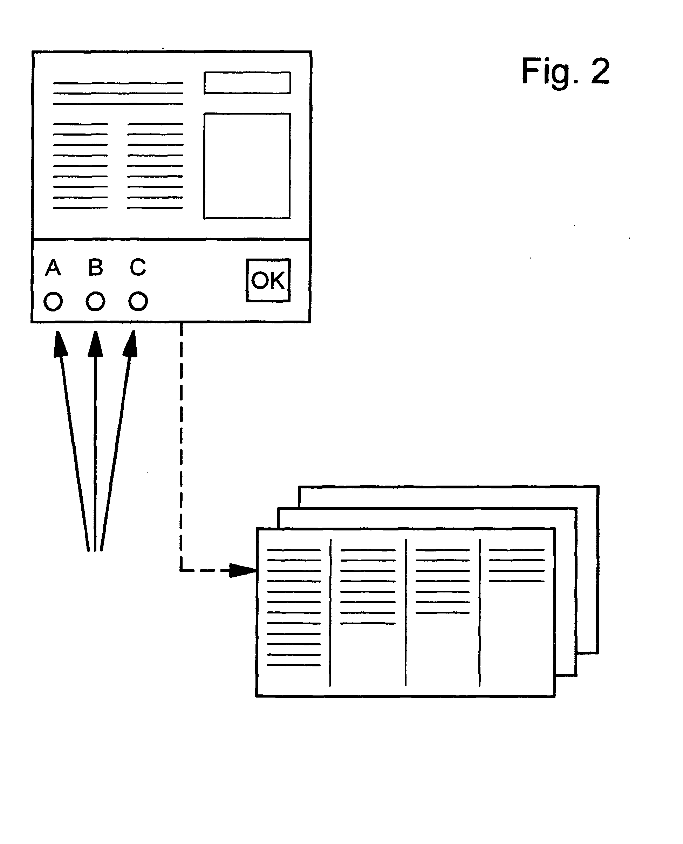

Der Aufbau der Anzeige des Browsers mit Rückkanal ist schematisch Fig. 2 entnehmbar. Dort ist gezeigt, daß in einem oberen Fenster eine Internet-Seite, nämlich der auf dem ersten Server 8 gehaltene Anzeigedatensatz, angezeigt wird, während darunter in einem separaten Fenster gleichzeitig eine Eingabeaufforderung dargestellt wird. Wie aus Fig. 2 ferner ersichtlich, werden drei Antwortmöglichkeiten A, B und C zur Verfügung gestellt. Auf ein Quittieren der Eingabe mit einem Klick auf eine "OK"-Taste werden die eingegebenen Antwortdaten, also die Antwort A, B oder C, automatisch an den Feedback-Server 3 übertragen. Dort werden die Antwortdaten, wie in Fig. 2 schematisch angedeutet, automatisch in einer Datenbank abgespeichert und stehen dann für eine Weiterverarbeitung oder Auswertung zur Verfügung.

Durch das auf dem Fragedaten-Server 2 gehaltene Regelwerk ist festgelegt, was für ein Anzeigedatensatz von einem nächsten Server zusammen mit was für einem Fragedatensatz für den nächsten Schritt verwendet wird. Gemäß dem vorliegend beschriebenen bevorzugten Ausführungsbeispiel der Erfindung wird im nächsten Schritt, nämlich nach Quittieren der "OK"-Taste automatisch ein vorbestimmter Anzeigedatensatz eines zweiten Servers 9 zusammen mit einer auf einem zugehörigen Fragedatensatz basierenden Eingabeaufforderung angezeigt. Dabei kann die Eingabeaufforderung von der zuvor angezeigten Eingabeaufforderung verschieden sein, es kann jedoch auch die gleiche Eingabeaufforderung verwendet werden. Durch Quittieren der "OK"-Taste wird dann automatisch ein auf einem dritten Server 10 gehaltener Anzeigedatensatz zusammen mit einer entsprechenden Eingabeaufforderung angezeigt usw.

Dabei muß darauf hingewiesen werden, daß die verschiedenen, nacheinander angezeigten Anzeigedatensätze nicht zwingend auf voneinander verschiedenen Servern 8, 9, 10 vorhanden sein müssen. Vielmehr kann auch vorgesehen sein, daß mehrere oder alle Anzeigedatensätze auf einem einzigen Server 8 vorhanden sind. Wesentlich ist lediglich, daß der Fragedaten-Server 2 und der Feedback-Server 3 dem Betreiber des Datenübertragungsverfahrens gemäß dem vorliegend beschriebenen bevorzugten Ausführungsbeispiel der Erfindung zugänglich sind, so daß er das Regelwerk und damit einerseits die angezeigten Anzeigedatensätze und andererseits die konkrete Formulierung der damit verbundenen Fragendatensätze beeinflussen kann. Als Fragedaten-Server oder Feedback-Server kommt daher kein "fremder Server", wie der erste Server 8, der zweite Server 9 oder der dritte Server 10 in Betracht. Jedoch wäre es grundsätzlich möglich, solche Anzeigedatensätze für das vorliegend beschriebene Datenübertragungsverfahren zu verwenden, die auf dem Fragedaten-Server 2 oder auf dem Feedback-Server 3 selbst gehalten werden.

Zur Erzeugung des Regelwerks und der Fragedatensätze, mit denen die entsprechenden Eingabeaufforderungen verbunden sind, kann ein eigenes Programm vorgesehen sein. Dies kann grundsätzlich auf einem beliebigen Gerät ablaufen, solange die damit erzeugten Daten, also das Regelwerk und die Fragedatensätze, auf den Fragedaten-Server 2 übertragen werden können, von wo aus sie für den Client 4 erreichbar sind.

Das erfindungsgemäße Datenübertragungsverfahren kann weiterhin in einer Vielzahl von Anwendungsgebieten verwendet werden. Zuvor schon genannt worden ist die Möglichkeit, mittels des in Rede stehenden Datenübertragungsverfahrens Marktforschung zu betreiben. Konkret ist nämlich z. B. eine Online-Befragung über die Wirkung und Beurteilung von Internet-Seiten verschiedener Anbieter möglich. Dabei werden nacheinander automatisch verschiedene Internet-Seiten, gegebenenfalls von verschiedenen Anbietern, angezeigt, und gleichzeitig erfolgt automatisch eine Eingabeaufforderung z. B. dahin, wie die jeweilige Internet-Seite beurteilt wird. Als mögliche Antwortdaten kämen dann z. B. in Betracht: "sehr gut", "gut", "mittel" und "gar nicht". Die auf diese Weise gewonnenen Antwortdaten liegen dann nach einer automatischen Übertragung zentral, nämlich auf dem Feedback-Server 3 vor, wobei insbesondere auch vorteilhaft ist, daß gleichzeitig eine Vielzahl von Befragten mit der Online-Befragung befaßt sein können, so daß eine Online-Befragung in kürzester Zeit, nämlich innerhalb weniger Stunden einschließlich der Auswertung der Antwortdaten abgeschlossen werden kann.

Ein weiterer Anwendungsbereich des erfindungsgemäßen Datenübertragungsverfahrens liegt im Bereich des eLearning, also des Lernens und der Kontrolle von Gelerntem über elektronische Medien. Über den vorgesehenen Rückkanal kann eine kontinuierliche Lernkontrolle erfolgen, und es kann sogar vorgesehen sein, mit Hilfe des erfindungsgemäßen Datenübertragungsverfahrens Tests oder Klausuren durchzuführen. Auch hier liegt wieder ein ganz wesentlicher Vorteil in der direkten Erfassung der Antwortdaten zentral auf dem Feedback-Server 3, so daß umgehend und auf eine einfache Weise eine Auswertung der Antwortdaten vorgenommen werden kann. Dabei umfaßt eLearning jedoch nicht nur den schulischen oder universitären Bereich, sondern kann auch bei Mitarbeiterschulungen eingesetzt werden. Dabei kann z. B. ein Gruppenleiter auf bequeme Weise eine Rückkopplung von seinen Mitarbeitern bezüglich deren jeweiliger Qualifikation im entsprechenden Gebiet erzielen.

Schließlich liegt ein wesentliches Anwendungsgebiet für das erfindungsgemäße Datenübertragungsverfahren auch im Anbieten einer sogenannten "Guided Tour". Dabei wird mit Hilfe des Regelwerks festgelegt, in welcher Reihenfolge nacheinander vorbestimmte Internet-Seiten auf grundsätzlich beliebigen Internet-Servern angezeigt werden. Dazu können einerseits Eingabeaufforderungen, also zusätzliche Einblendungen und Informationen gegeben werden, wobei nicht zwingend Antwortdaten eingegeben und erfaßt werden müssen. Das zusätzliche Fenster, das grundsätzlich für die Eingabeaufforderung vorgesehen ist, kann im Falle einer Guided Tour auch nur dazu vorgesehen sein, die angezeigte Internet-Seite, auf die der Anbieter der "Guided Tour" keine Zugriff hat, zu kommentieren oder zu ergänzen. Im übrigen kann über den Rückkanal automatisch protokolliert werden, ob und welche Internet-Seiten im Rahmen der "Guided Tour" angezeigt worden sind.

## Patentansprüche

1. Datenübertragungsverfahren, zur Übertragung von Datensätzen zwischen wenigstens einem Server (8, 9, 10) und einem Client (4), wobei ein Anzeigedatensatz vorgesehen ist, der auf dem Server (8, 9, 10) gehalten wird und für den Client (4) über eine zumindest temporär zu dem Server (8, 9, 10) aufgebaute Verbindung zugänglich ist, der Anzeigedatensatz automatisch von dem Server (8, 9, 10) über die zumindest temporär aufgebaute Verbindung abgerufen, auf den Client (4) übertragen und von dem Client (4) angezeigt wird, **dadurch gekennzeichnet, daß** zumindest zeitlich teilweise überlappend mit der von dem Client (4) erfolgenden Anzeige des Anzeigedatensatzes auf der Grundlage eines von dem Anzeigedatensatz verschiedenen Fragedatensatzes von dem Client (4) an den Nutzer des Clients (4) automatisch eine Eingabeaufforderung zur Eingabe von Antwortdaten ergeht.

2. Datenübertragungsverfahren nach Anspruch 1, **dadurch gekennzeichnet, daß** die auf die Eingabeaufforderung hin von dem Nutzer eingegebenen Antwortdaten automatisch an einen Feedback-Server (3) übertragen werden.

3. Datenübertragungsverfahren nach Anspruch 1 oder 2, **dadurch gekennzeichnet, daß** die von dem Client (4) erfolgende Anzeige des Anzeigedatensatzes und die auf der Grundlage des Fragedatensatzes erfolgende Eingabeaufforderung von dem Client (4) an den Nutzer des Clients (4) zur Eingabe von Antwortdaten synchron erfolgen.

4. Datenübertragungsverfahren nach einem der Ansprüche 2 bis 3, **dadurch gekennzeichnet, daß** der Fragedatensatz auf dem Client (4) gehalten wird oder automatisch online, über eine zumindest temporär aufgebaute Verbindung von einem Fragedaten-Server (2) auf den Client (4) übertragen wird.

5. Datenübertragungsverfahren nach Anspruch 4, **dadurch gekennzeichnet, daß** als Fragedaten-Server (2) der Feedback-Server (3) verwendet wird.

6. Datenübertragungsverfahren nach einem der Ansprüche 2 bis 5, **dadurch gekennzeichnet, daß** für die Eingabe der Antwortdaten der Client (4) vorgesehen ist und die automatische Übertragung der Antwortdaten an den Feedback-Server (3) ebenfalls über den Client (4), erfolgt.

7. Datenübertragungsverfahren nach einem der Ansprüche 1 bis 6, **dadurch gekennzeichnet, daß** für die Anzeige des Anzeigedatensatzes, für die Eingabeaufforderung auf der Grundlage des Fragedatensatzes und für die Eingabe der Antwortdaten eine, Anzeigevorrichtung (7) vorgesehen ist.

8. Datenübertragungsverfahren nach einem der Ansprüche 1 bis 7, **dadurch gekennzeichnet, daß** automatisch zeitlich aufeinanderfolgend eine Mehrzahl von Anzeigedatensätzen von dem Server (8, 9, 10) oder einem oder mehreren anderen Servern (8, 9, 10) auf den Client (4) übertragen und von dem Client (4) angezeigt wird, wobei jeweils zumindest zeitlich überlappend mit der von dem Client (4) erfolgenden Anzeige des jeweilige Anzeigedatensatzes auf der Grundlage eines von dem Anzeigedatensatz verschiedenen jeweiligen Fragedatensatzes automatisch von dem Client (4) an den Nutzer des Clients (4) eine jeweilige Eingabeaufforderung zur Eingabe von Antwortdaten ergeht.

9. Datenübertragungsverfahren nach Anspruch 8, **dadurch gekennzeichnet, daß** ein vorbestimmtes Regelwerk vorgesehen ist, in dem der jeweils anzuzeigende Anzeigedatensatz und der zugehörige jeweilige Fragedatensatz für die Eingabeaufforderung, und vorzugsweise deren Reihenfolge, zur Steuerung des automatischen Ablaufs, festgelegt sind.

10. Datenübertragungsverfahren nach Anspruch 9, **dadurch gekennzeichnet, daß** das Regelwerk auf dem Client (4) gehalten wird oder automatisch, vorzugsweise online, zu Beginn oder während des Datenübertragungsverfahrens, über eine zumindest temporär aufgebaute Verbindung von dem Fragedaten-Server (2) auf den Client (4) übertragen wird.

11. Datenübertragungsverfahren nach einem der Ansprüche 1 bis 10, **dadurch gekennzeichnet, daß** der Ablauf des Verfahrens, automatisch protokolliert wird.

## Claims

1. Data transmission process for transmission of data sets between at least one server (8, 9, 10) and one client (4), there being a display data set which is kept on the server (8, 9, 10) and which is accessible to the client (4) via a connection which has been set up at least temporarily to the server (8, 9, 10), the display data set being automatically retrieved from the server (8, 9, 10) via at a connection which has been set up at least temporarily, transmitted to the client (4) and displayed from the client (4), **characterized in that** at least partially overlapping in time with the display of the display data set which takes place from the client (4) based on a query data set which is different from the display data set, an input request for input of response data is sent automatically from the client (4) to the user of the client (4).

2. Data transmission process as claimed in claim 1, wherein the response data which have been input by the user upon the input request are automatically transmitted to the feedback server (3).

3. Data transmission process as claimed in claim 1 or 2, wherein the display of the display data set which takes place from the client (4) and the input request which takes place based on the query data set take place synchronously from the client (4) to the user of the client (4) for input of response data.

4. Data transmission process as claimed in one of claims 2 to 3, wherein the query data set online is kept on the client (4) or is transmitted automatically online via a connection which has been set up at least temporarily from the query data server (2) to the client (4).

5. Data transmission process as claimed in claim 4, wherein the feedback server (3) is used as a query data server (2).

6. Data transmission process as claimed in one of claims 2 to 5, wherein there is a client (4) for the input of the response data and automatic transmission of the response data to the feedback server (3) likewise takes place via the client (4).

7. Data transmission process as claimed in one of claims 1 to 6, wherein for display of the display data set, for the input request based on the query data set and for the input of the response data there is a display device (7).

8. Data transmission process as claimed in one of claims 1 to 7, wherein a plurality of display data sets are automatically transmitted in succession in time from the server (8, 9, 10) or from one or more other servers (8, 9, 10) to the client (4) and are displayed by the client (4), the respective input request for input of response data being sent automatically from the client (4) to the user of the client (4) at least partially overlapping in time with the display of the respective display data set which takes place from the client (4) based on a respective query data set which differs from the display data set.

9. Data transmission process as claimed in claim 8, wherein there is a predetermined control mechanism in which the display data set which is to be displayed at the time and the pertinent respective query data set for the input request, and preferably their sequence, are fixed for control of the automatic progression.

10. Data transmission process as claimed in claim 9, wherein the control mechanism is kept at the client (4) or is transmitted automatically, preferably online, at the start or during the data transmission process via a connection which has been set up at least temporarily from the query data server (2) to the client (4).

11. Data transmission process as claimed in one of claims 1 to 10, wherein the progression of the process is automatically protocolled.

## Revendications

1. Procédé de transmission de données pour la transmission de séries de données entre au moins un serveur (8, 9, 10) et un client (4), une série de données d'affichage étant prévue qui est conservée sur le serveur (8, 9, 10) et qui est accessible au client au moyen d'une liaison au serveur (8, 9, 10) qui est établie au moins temporairement, la série de données d'affichage étant scrutée automatiquement par le serveur (8, 9, 10) au moyen de la liaison établie au moins temporairement, transmise vers le client (4) et affichée par le client (4), **caractérisé en ce qu'**une demande d'entrée pour l'entrée de données de réponse, recouvrant au moins partiellement le temps de l'affichage de la série de données d'affichage résultant du client (4), basée sur une série de données d'interrogation différente de la série de données d'affichage, est automatiquement envoyée du client (4) vers l'utilisateur du client (4).

2. Procédé de transmission de données selon la revendication 1, **caractérisé en ce que** les données de réponse, entrées par l'utilisateur suite à la demande d'entrée, sont automatiquement transmises à un serveur de feedback (3).

3. Procédé de transmission de données selon la revendication 1 ou 2, **caractérisé en ce que** l'affichage de la série de données d'affichage résultant du client (4) et la demande d'entrée basée sur la série de données d'interrogation sont assurées de manière synchrone pour l'entrée de données de réponse du client (4) à l'utilisateur du client (4).

4. Procédé de transmission de données selon une des revendications 2 à 3, **caractérisé en ce que** la série de données d'interrogation est conservée chez le client (4) ou transmise automatiquement en ligne par un serveur de données de demandes (2) au client (4) au moyen d'une liaison établie au moins temporairement.

5. Procédé de transmission de données selon la revendication 4, **caractérisé en ce que** le serveur de feedback (3) est utilisé comme serveur de données de demandes (2).

6. Procédé de transmission de données selon une des revendications 2 à 5, **caractérisé en ce que** le client (4) est prévu pour l'entrée des données de réponse et que la transmission automatique des données de réponse au serveur de feedback (3) est également assurée au moyen du client (4).

7. Procédé de transmission de données selon une des revendications 1 à 6, **caractérisé en ce qu'**un dispositif d'affichage (7) est prévu pour l'affichage de la série de données d'affichage, pour la demande d'entrées basée sur la série de demandes et pour l'entrée des données de réponse.

8. Procédé de transmission de données selon une des revendications 1 à 7, **caractérisé en ce qu'**une pluralité de séries de données d'affichage, se succédant en temps automatiquement, est transmise depuis le serveur (8, 9, 10) ou depuis un ou plusieurs autres serveurs (8, 9, 10) au client (4) et est affichée par le client (4), une demande respective d'entrée pour l'entrée de données de réponse, recouvrant chaque fois au moins le temps de l'affichage de la série respective de données d'affichage résultant du client (4), basée sur une série respective de données d'interrogation différente de la série de données d'affichage, étant envoyée automatiquement du client (4) vers l'utilisateur du client (4).

9. Procédé de transmission de données selon la revendication 8, **caractérisé en ce qu'**un système défini de régulation est prévu pour le pilotage du déroulement automatique, dans lequel sont définies la série de données respective à afficher et la série de données de demandes respective correspondante pour la demande d'entrée et de préférence leur succession.

10. Procédé de transmission de données selon la revendication 9, **caractérisé en ce que** le système de régulation est conservé chez le client (4) ou transmis automatiquement, de préférence en ligne, par le serveur de données de demandes (2) au client (4) au début ou pendant la procédure de transmission de données au moyen d'une liaison établie au moins temporairement.

11. Procédé de transmission de données selon une des revendications 1 à 10, **caractérisé en ce que** le déroulement du procédé est défini par un protocole automatique.
